# FASCICULE DE BREVET EUROPEEN

(11) **EP 0 883 008 B1**
(45) Date de publication et mention de la délivrance du brevet: **21.11.2007**
(21) Numéro de dépôt: 98401335.9
(22) Date de dépôt: 04.06.1998
(51) Int. Cl.: G02B 6/44

(54) **Cable optique pour le transfert de signaux dans un environnement sévère**
Optisches Kabel für Datenübertragung unter rauhen Bedingungen
Optical cable for data transmission in rough environnment

(30) Priorité: 06.06.1997 FR 9707034
(43) Date de publication de la demande: 09.12.1998
(73) Titulaire: Auxitrol SA, 18000 Bourges (FR)
(72) Inventeur: Lhuillier, Bruno, 36100 Issoudun (FR); Houard, Jean-Marie, 18250 Henrichemont (FR)
(74) Mandataire: Texier, Christian

(56) Documents cités:
- GB-A- 2 184 512
- US-A- 4 949 894
- US-A- 5 183 079
- US-A- 5 309 539
- PATENT ABSTRACTS OF JAPAN vol. 012, no. 470 (P-798), 9 décembre 1988 & JP 63 189814 A (NIPPON STEEL WELD PROD & ENG CO LTD), 5 août 1988
- PATENT ABSTRACTS OF JAPAN vol. 009, no. 221 (P-386), 7 septembre 1985 & JP 60 079311 A (FURUKAWA DENKI KOGYO KK;OTHERS: 01), 7 mai 1985
- PATENT ABSTRACTS OF JAPAN vol. 011, no. 293 (P-619), 22 septembre 1987 & JP 62 087917 A (KIYOSHI HAJIKANO), 22 avril 1987

## Description

La présente invention est relative aux câbles optiques pour transfert de signaux dans un environnement sévère.

Par environnement sévère, on entend ici un environnement dans lequel les niveaux vibratoires et les températures sont élevés.

On sait en effet qu'un niveau vibratoire élevé met en danger la tenue mécanique d'un câble optique, tandis qu'une température élevée, en endommageant la gaine optique du câble, est susceptible de dégrader ses performances de transmission.

L'invention trouve notamment avantageusement application pour les câbles optiques destinés à être disposés dans l'environnement d'un moteur thermique, tel qu'un moteur d'avion ou encore de lanceur spatial pour lequel les températures peuvent atteindre 250°C à 1000°C et les niveaux vibratoires peuvent aller jusqu'à 200 g RMS sur une plage de fréquence de 5 à 20 000 Hz.

On utilise généralement dans un environnement sévère des câbles optiques dans lesquels le maintien mécanique d'une fibre unique ou d'un faisceau de fibres optiques est réalisé par une gaine en un matériau organique ou plastique.

Toutefois, de telles gaines de protection ont une raideur en flexion mécanique réduite, ce qui, lorsque l'on souhaite concevoir un cheminement de l'information optique avec des modes de vibration à fréquence élevée, impose de prévoir un grand nombre de points de fixation le long du câble de façon à disposer de longueurs entre fixation courtes. Les fréquences propres du câble, en dehors des fréquences d'excitation du moteur par exemple, sont en effet le garant d'une non résonance de celui-ci et donc de contraintes mécaniques faibles, ce qui permet d'assurer une bonne longévité pour le dispositif. Toutefois, du fait de ce nombre élevé de points de fixation - généralement réalisés par des colliers - un tel dispositif s'avère d'un coût très important.

Par ailleurs, les gaines de protection en matériau plastique ont en température des limitations d'emploi importantes. La plupart des matériaux classiques tels que le Téflon (marque déposée), le Kapton, ou les matériaux polymères présentent des températures de limite d'utilisation de l'ordre de ou inférieures à 260°C.

Pour résoudre ces problèmes de raideur mécanique et tenue en température, il est connu d'utiliser pour le maintien mécanique des fibres optiques des tubes métalliques soit rigides, soit de type onduleux, c'est-à-dire constitués d'une pluralité d'éléments articulés leur conférant une certaine déformabilité.

Néanmoins, avec de tels dispositifs, le montage de la ou des fibres dans la gaine métallique doit être réalisé avec un minimum de jeu, de façon à réduire les vibrations à l'intérieur de la gaine. Pour limiter encore ce jeu, on peut également adjoindre lors du montage une sous gaine en laine de céramique, dont on enrubanne la ou les fibres par exemple.

Toutefois, une telle sous-gaine ne peut être utilisée que sur de faibles longueurs (30 cm). En outre, même avec une telle sous-gaine et un jeu réduit, le maintien réalisé n'est généralement pas pleinement satisfaisant.

L'invention propose quant à elle un câble optique qui permet de résoudre ces différents inconvénients.

Selon l'invention, la solution consiste en un câble optique comportant une fibre optique unique ou un faisceau de fibres optiques s'étendant dans un tube métallique, caractérisé en ce qu'il comporte une gaine tressée en céramique interposée entre la ou les fibres et le tube métallique, ledit tube métallique réalisant un maintien desdites fibres par serrage de ladite gaine.

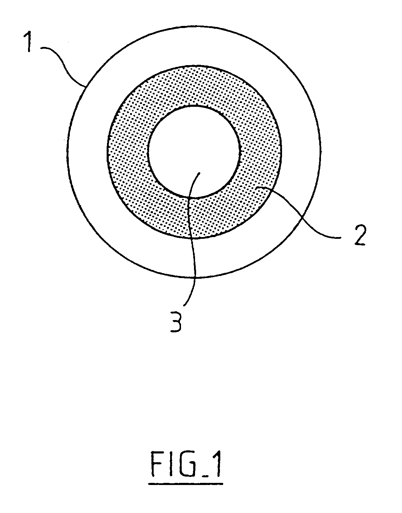

D'autres caractéristiques et avantages de l'invention ressortiront encore de la description qui suit qui est purement illustrative et non limitative et qui doit être lue en regard du dessin unique annexé qui représente schématiquement en coupe un câble conforme à un mode de réalisation possible de l'invention.

Le câble illustré sur cette figure comporte dans un tube métallique 1 une gaine en céramique 2 dans laquelle s'étend une fibre optique unique ou un faisceau de fibres optiques 3.

Le tube métallique 1 est par exemple de type onduleux. Il est en un matériau tel que l'inox (marque déposée), en un matériau à base de nickel ou en un super alliage, tel que l'inconel (marque déposée), l'hastelloy (marque déposée) X ou A230, etc..

La gaine en céramique 2 est tressée. Elle peut être réalisée à partir de matériaux tels que ZRO₂, Al₂O₃, MgO, SiO₂, B₂O_{5,} etc... Par exemple, elle est réalisée en NEXTEL (marque 3M) qui est une céramique constituée de silice, d'oxyde de bore et d'alumine,

La ou les fibres 3 sont de type en verre (quartz, silice) ou encore en plastique.

Lors de la fabrication du câble qui vient d'être décrit, on réalise un retrait puis un martelage à froid sur le tube métallique 1 de façon à réduire son diamètre. On réalise ainsi, par l'intermédiaire de la gaine 2 en céramique, un serrage de la ou des fibres optiques 3 qui permet d'assurer le maintien mécanique de ladite ou desdites fibres 3. La structure tressée de cette gaine 2 évite que ce serrage n'endommage la ou lesdites fibres.

A titre d'exemple, pour un câble comportant une fibre optique unique de 400 µm de diamètre, le diamètre extérieur du tube 1 peut être de 3,5 mm, l'épaisseur dudit tube étant de 0,5 mm.

La structure qui vient d'être décrite présente de nombreux avantages.

Elle assure une bonne tenue mécanique de la fibre ou des fibres dans le câble, le serrage facilitant en outre l'alignement optique de la ou des fibres.

Elle confère au câble une bonne raideur, tout en autorisant son formage à froid pour les montages sur moteur.

Le câble présente une bonne tenue à la température et à l'environnement vibratoire et est apte à résister à plusieurs centaines de milliers d'heures de vol. Il a déjà été testé sur des moteurs d'avions.

Il peut être déformé pour suivre un cheminement moteur.

Egalement, on notera que la structure qui vient d'être décrite permet, par soudures sur le tube métallique 1, de réaliser des câbles hermétiques.

Egalement, le maintien des fibres dans la gaine et le tube facilite l'opération de polissage des embouts du câble.

## Revendications

1. Câble optique comportant une fibre optique unique ou un faisceau de fibres optiques s'étendant dans un tube métallique, **caractérisé en ce qu'**il comporte une gaine tressée en céramique interposée entre la ou les fibres et le tube métallique, ledit tube métallique réalisant un maintien desdites fibres par serrage de ladite gaine directement contre la ou les fibres optiques.

2. Procédé pour la réalisation d'un câble optique selon la revendication 1, **caractérisé en ce qu'**on dispose la ou les fibres optiques et la gaine en céramique tressée dans le tube métallique et **en ce qu'**on rétreint le tube métallique par retrait, puis martelage à froid.

3. Utilisation d'un câble optique selon la revendication 1 dans l'environnement d'un moteur thermique, notamment d'un moteur d'avion ou d'un lanceur spatial.

## Claims

1. An optical cable comprising a single optical fiber or a bundle of optical fibers extending inside a metal tube, the optical cable being **characterized in that** it includes a braided ceramic sheath interposed between the fiber(s) and the metal tube, said metal tube holding said fibers in place by compressing said sheath directly against the optical fiber(s).

2. A method of making an optical fiber according to claim 1, **characterized in that** the optical fiber(s) and the braided ceramic sheath are disposed inside the metal tube, and **in that** the metal tube is swaged by shrinking and cold working.

3. The use of an optical cable according to claim 1, in the environment of a hot engine, in particular in an engine of an airplane or a rocket launcher.

## Patentansprüche

1. Optisches Kabel umfassend eine einzelne optische Faser oder ein Bündel optischer Fasern, die sich in einem Metallrohr erstrecken, **dadurch gekennzeichnet, dass** es einen geflochtenen Mantel aus Keramik umfasst, der zwischen die Faser(n) und das Metallrohr gelegt ist, wobei das Metallrohr eine Stützung der Fasern durch Drücken des Mantels direkt gegen die Faser(n) verwirklicht.

2. Verfahren zur Herstellung eines optischen Kabels gemäß Anspruch 1, **dadurch gekennzeichnet, dass** die optische(n) Faser(n) und der geflochtene Mantel aus Keramik in dem Metallrohr angeordnet werden und das Metallrohr durch Schwindung und anschließendes Kalthämmern reduziert wird.

3. Verwendung eines optischen Kabels gemäß Anspruch 1 in der Umgebung einer Wärmekraftmaschine, insbesondere eines Motors eines Flugzeugs oder einer Raumfähre.
